Europäisches Patentamt

European Patent Office

Office européen des brevets

(19)

(11) Veröffentlichungsnummer: **0 164 630 B1**

(12)  **EUROPÄISCHE PATENTSCHRIFT**

(45) Veröffentlichungstag der Patentschrift: **27.02.91**

(21) Anmeldenummer: **85106478.2**

(22) Anmeldetag: **25.05.85**

(51) Int. Cl.5: **G07B 15/02**, G07F 7/00, G07F 17/12

(54) **Anlage zur aufsichtslosen Kontrolle der Benutzung, insbesondere der Benutzungszeit, von Badeanstalten, Lesesälen oder dergleichen.**

(30) Priorität: **09.06.84 DE 3421667**

(43) Veröffentlichungstag der Anmeldung:
**18.12.85 Patentblatt 85/51**

(45) Bekanntmachung des Hinweises auf die
Patenterteilung:
**27.02.91 Patentblatt 91/09**

(84) Benannte Vertragsstaaten:
**AT BE CH DE FR GB IT LI LU NL SE**

(56) Entgegenhaltungen:
**EP-A- 0 006 403**
**AT-B- 278 415**
**DE-B- 2 359 317**

(73) Patentinhaber: **Schulte-Schlagbaum Aktienge-**
**sellschaft**
**Nevigeser Strasse 100-115**
**D-5620 Velbert 15(DE)**

(72) Erfinder: **Eisermann, Armin**
**Eichholzstrasse 14**
**D-5620 Velbert 1(DE)**

(74) Vertreter: **Rieder, Hans-Joachim, Dr.**
**Corneliusstrasse 45 Postfach 11 04 51**
**D-5600 Wuppertal 11(DE)**

## Beschreibung

Die Erfindung betrifft eine Anlage gemäß Gattungsbegriff des Hauptanspruchs. Eine derartige Anlage ist aus der DE-AS 23 59 317 bekannt. Dort wird eine Einrichtung für einen vollautomatischen Kassenbetrieb in Hallenbädern oder dergleichen offenbart, bei der nach Vorwahl einer Tarifart an einem Eingangsautomaten nach Bezahlung ein mit codierten Informationen versehenes Schließelement abgegeben wird. Dieses Schließelement dient einerseits zur Überwachung der bezahlten Benutzerzeit, indem es beim Verlassen des Hallenbades in einen Ausgangsautomaten eingeführt werden muß, der dann den Ausgang nur freigibt, wenn die Besuchszeit innerhalb der bezahlten Benutzungszeit liegt, andererseits dient das Schließelement als Schlüssel für einen bestimmten Garderobenschrank, dessen fest zugeordnete Codierung mit dem Lochcode auf der Eintrittskarte übereinstimmt. Diese Anlage weist jedoch den Nachteil auf, daß bei einer Nichtabgabe des Schließelementes an den Ausgangsautomaten beim Verlassen des Hallenbades aufgrund der dem Garderobenschrank fest zugeordneten Codierung bei der Bereitstellung eines neuen identischen Schließelements aufgrund des immer noch vorhandenen ersten Schließelementes ein Mißbrauch nicht ausgeschlossen werden kann. Der Mißbrauch kann nur durch ein Auswechseln des Garderobenschrankschlosses bzw. dessen Codierung verhindert werden.

Weiterhin bekannt ist aus der AT-PS 278 415 ein eingangsseitig angeordneter Automat, der eine Vielzahl unter sich verschiedener Einzelschlösser und ebensoviel, jeweils zu einem der Schlösser passende Schließelemente besitzt. Jedem dieser Einzelschlösser ist ein Zeitmeß werk zugeordnet. Auch hier dient das Schließelement als Kontrollelement, welches nach Geldeingang entnehmbar ist. Nachteilig an dieser Ausgestaltung ist der erhebliche Aufwand, der einerseits eine doppelte Anzahl von Schlössern und andererseits eine große Anzahl von Zeitmeßwerken benötigt und darüber hinaus auch einen oben angesprochenen Mißbrauch nicht ausschließt.

Der Erfindung liegt deshalb die Aufgabe zugrunde, eine Anlage der vorausgesetzten Art von einem, benutzervorteilhaften Aufbau anzugeben derart, daß ein Mißbrauch weitestgehend verhindert ist.

Gelöst wird diese Aufgabe durch die kennzeichnenden Merkmale des Anspruchs 1.

Zufolge derartiger Ausgestaltung ist eine gattungsgemäße Anlage von einfachem Aufbau gegeben. Der Automat gibt nach Geldeingabe vorzugsweise streifenförmige, dem Code des Schließfachschlosses entsprechende Schließelemente aus, wobei die Codierung personenbezogen sein kann. Es ist nun möglich, mittels des Schließelements die Eingangssperre zu passieren und das Schließelement dem Schließfachschloß zuzuführen. Hierbei erfolgt eine Auswertung derart, daß bei identischer Codierung von Schließelement und Schließfachschloß dieses mittels einer gesonderten Betätigungshandhabe schließbar ist. Es ist mittels des Schließelements eine Mehrfachbenutzung während eines Aufenthaltes in der Anlage möglich. Beim Verlassen der Anlage wird das Schließelement einbehalten und ausgewertet. Ein eventueller Überbetrag wird zurückerstattet oder es muß eine Nachgebühr bezahlt werden. Ein Mißbrauch der Schließelemente ist weitgehend verhindert. Selbst wenn ein Schließelement nicht zurückgegeben werden sollte, lassen sich keine unbefugten Manipulationen vornehmen. Wird nämlich für das gleiche Schließfachschloß ein neues, mit einer geänderten Codierung versehenes Schließelement vom Automaten ausgegeben, so erfolgt neben der Änderung der Codierung des Schließelementes auch die des zugehörigen Schließfachschlosses entsprechend einem Fortschreibeprogramm, wobei das Fortschreibeprogramm in einem Automaten identisch ist mit einem im zugehörigen Schließfachschloß gespeicherten Programm. Es ist der ein Schließelement zurückbehaltenden Person beim Wiedereintritt in die Badeanstalt nur dann möglich das Schließfachschloß zu benutzen, wenn zuvor kein anderer Benutzer das Schließfachschloß mit einem neuen, einen geänderten Code tragenden Schließelement betätigt hat. Dies kann z.B. dadurch erreicht werden, daß der Benutzer ein Schließelement mit der Wertigkeit 11 für ein Schließfachschloß bekommt. Bei der nächsten Ausgabe eines Schließelements für dieses Schließfachschloß erhält dann das Schließelement die Wertigkeit 22. Jeweils bei einer erneuten Ausgabe eines diesem Schließfachschloß zugeordneten Schließelements wird die Wertigkeit um 11 erhöht. Demnach erfolgt eine arthmetische Zunahme der Wertigkeit. Wird das Schließelement mit der Wertigkeit 11 einbehalten, so erhält ein anderer Benutzer nach Ablauf einer bestimmten Zeit, beispielsweise einem Tag, ein Schließelement mit der Wertigkeit 22. Er kann mit diesem Schließelement das Schließfachschloß betätigen, wobei dessen vom Programm bestimmter Wert auf die Höhe von 22 gebracht wird. Der zurückbehaltene Schlüssel mit der Wertigkeit 11 dagegen kann dann keine Schließfunktion des Schließfachschlosses einleiten. Er ist somit entwertet und unbrauchbar. Das bedeutet, daß jedes höhergeordnete Schließelement alle tiefergeordneten Schließelemente eliminiert. Eine solche Bauform eignet sich insbesondere dann, wenn die Stromversorgung der Schließfachschlösser durch Batterien erfolgt.

Dabei ist es vorteilhaft, daß Zwischenstufen des Schließfachschloß-Programms überspringbar sind. Selbst wenn mehrere Schließelemente z.B. nicht benutzt werden sollten, werden durch das zuletzt ausgegebene Schließelement die Zwischenstufen des Schließfachschloß-Programms übersprungen.

Dem Schließelement kann auch eine kontrollierbare Ausweisfunktion zukommen, auch z.B. als Zutrittserlaubnis zur abgetrennten Einrichtung des Bades, wobei eine Variation möglich ist dahingehend, daß das zu einem bestimmten Schließfach gehörige Schließelement mal diese Zutritts-Erlaubnis beinhaltet und mal nicht, z.B. je nach Tarifgefüge bzw. Tarifwahl. Diese Ausweisfunkton gestattet praktisch auch die Erfassung weiterer Leistungen. Dabei ist es von Vorteil, daß das Schließelement einen Freiraum zur Aufnahme zusätzlicher, vom Schließ- und Zeitcode unabhängiger Codierungen aufweist. Für das Schließelement kann ein Überbetrag bei der Ausgabe entrichtet werden, so daß persönliche Service-Leistungen in der Anstalt in Anspruch genommen werden können. Die Abrechnung erfolgt dann beim Zurückgeben des Schließelements. Vorzugsweise wird eine Service-Leistung nur dann erbracht, wenn das Schließelement noch den entsprechenden Gegenwert enthält. Eine Service-Leistung wird dabei am Schließelement in Form fälschungssicherer Codierungen vorgenommen.

Nachstehend werden zwei Ausführungsbeispiele der Erfindung anhand der Fig. 1-4 erläutert. Es zeigt

Fig. 1    im schematischen Grundriß eine Badeanstalt mit zugehöriger Anlage gemäß der ersten Ausführungsform zur aufsichtslosen Kontrolle der Benutzungszeit,

Fig. 2    eine Ansicht eines Schließfachschlosses mit eingeführtem Schließelement,

Fig. 3    eine Draufsicht auf das Schließfachschloß und

Fig. 4    im schematischen Grundriß eine Badeanstalt mit zugehöriger Anlage gemäß der zweiten Ausführungsform.

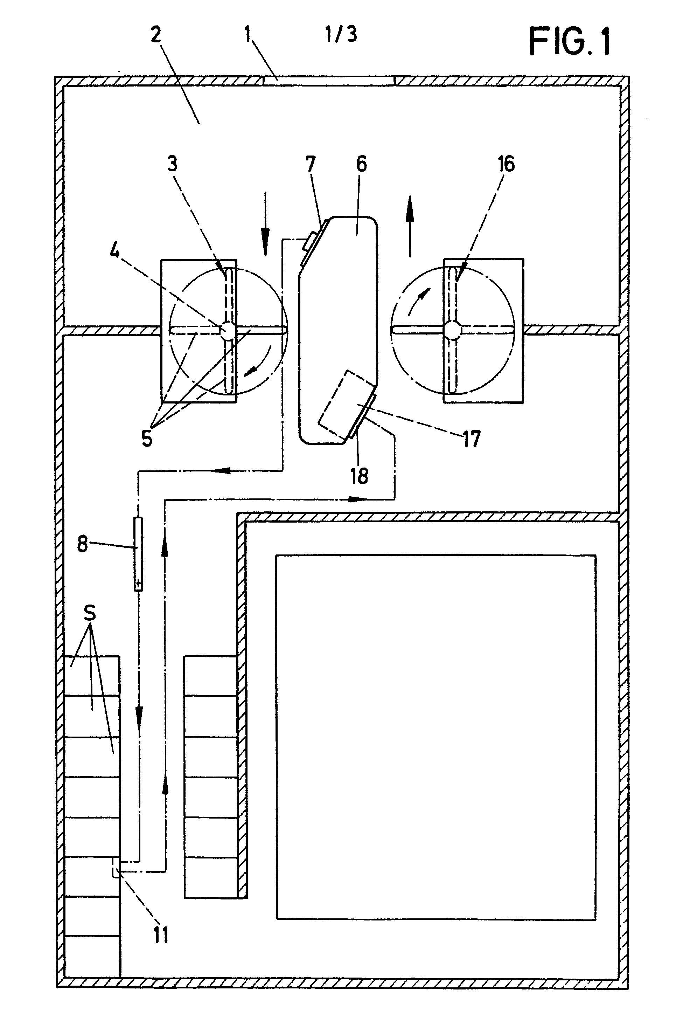

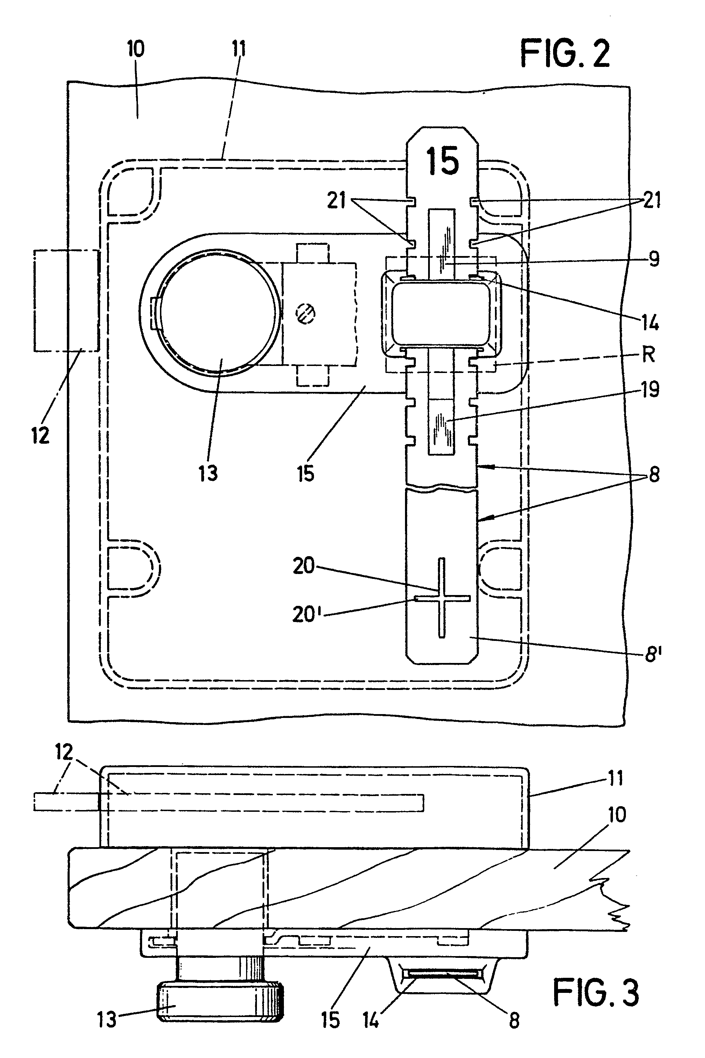

Gemäß der ersten Ausführungsform, dargestellt in den Fig. 1-3, ist der Haupteingang der Badeanstalt mit der Ziffer 1 bezeichnet. Von diesem gelangt der Besucher in einen Vorraum 2. Um die Badeanstalt benutzen zu können, muß er die in Form eines Drehkreuzes 3 ausgebildete Eingangssperre passieren. Das Drehkreuz 3 ist um eine vertikale Achse 4 gelagert und besitzt mehrere übereinander angeordnete Drehkreuzarme 5, die einen unrechtmäßigen Durchgang verhindern.

Die Eingangssperre 3 erstreckt sich neben einem eingangseitig angeordneten Automaten 6, welcher eine Begrenzung des Eintrittpfades darstellt. Letzterer ist eingangsseitig mit einem Bedienfeld 7 ausgestattet. Dort ist auch die Geldeingabe vorzunehmen. Danach gibt der Automat 6 ein streifenförmiges Schließelement 8 aus. Beim Ausführungsbeispiel öffnet mit der Ausgabe des Streifenelements 8 die Eingangssperre, so daß der Benutzer in das innere der Badeanstalt gelangen kann. Es ist jedoch auch möglich, den Automaten entfernt von der Eingangssperre 3 unterzubringen. Dann dient das streifenförmige Schließelement 8 als Ticket, um die Eingangssperre 3 passieren zu können. In diesem Falle müßte der Eingangssperre eine das Schließelement kontrollierende Lesestation zugeordnet sein.

Das streifenförmige Schließelement 8 kann von einer im Automaten untergebrachten, nicht dargestellten Vorratsrolle abgezogen werden. Das streifenförmige Schließelement 8 wird bei der Ausgabe entsprechend einem Fortschreibeprogramm kodiert. Zu diesem Zweck kann der Streifen 8 an entsprechender Stelle ein zu kodierendes Feld 9 besitzen. Dies kann im Wege einer Lochkodierung geschehen.

Beim Ausführungsbeispiel wird das Schließelement 8 mit der Nummer 15 versehen. Dies zeigt dem Benutzer an, daß er Zugang zu einem der Schließfächer 5 mit der Nummer 15 hat. Das dort an der Türe 10 innenseitig angebrachte Schließfachschloß 11 enthält einen Riegel 12. Dieser ist schließbar durch Drehen eines türaußenseitig befindlichen Drehknopfes 13. Eine Betätigung des letzteren kann nur durch Einstecken des streifenförmigen Schließelementes 8 in einen Durchzugschlitz 14 erfolgen, welcher in einem Gehäuse 15 an der Türaußenseite festgelegt ist. Dieses Gehäuse 15 umfaßt mit seinem freien Ende den Drehknopf 13. In dem Gehäuse 15 ist auf Höhe des Durchzugsschlitzes 14 ein schematisch veranschaulichter Rechner R untergebracht. Das zur Kodierung des Schließelements 8 verwendete Fortschreibeprogramm ist identisch mit dem Programm des im Schließfachschloß 11 untergebrachten Rechners R. Wird nun das streifenförmige Schließelement 8 durch den Durchzugsschlitz 14 geführt und wird die Kodierung als richtig erkannt, so gibt der Rechner R den Impuls an das Schließeingerichte weiter, woraufhin der Drehknopf 13 verlagerbar ist. Der Riegel 12 des Schlosses 11 läßt sich verschließen. Um das Schließfachschloß 11 öffnen zu können, ist erneut das streifenförmige Schließelement 8 einzuführen. Beim Verlassen der Badeanstalt ist das Schließelement 8 in ein einer Ausgangssperre 16 vorgeordnetes Prüfgerät 17 einzustecken. Letzteres ist ebenfalls in dem Gehäuse des Automaten 6 untergebracht. Wurde die zulässige Benutzungszeit nicht überschritten, kann die in Form eines Drehkreuzes ausgebildete Ausgangssperre 16 passiert werden. Ist der Zeitraum jedoch größer als die zulässige Benutzungszeit, wird eine der überschrittenen Zeit entsprechende Nachgebühr auf einem Leuchtfeld 18 angezeigt. Erst nach Zahlen der Nachgebühr öffnet die Eingangssperre 16.

Wurden beim Eintritt in die Badeanstalt zwei oder mehr Schließelemente 8 erworben und nur eines benutzt, können mit den dann zurückbehaltenen Schließelementen beim Wiedereintritt in die Badeanstalt keine unbefugten Manipulationen vorgenommen werden, wie es eingangs schon erwähnt wurde.

Das streifenförmige Schließelement 8 weist im Anschluß an das Kodierungsfeld 9 einen Freiraum 19 auf. Dort können vom Schließ- und Zeitkode unabhängige Kodierungen vorgenommen werden, und zwar bei entsprechenden Service-Leistungen innerhalb der Badeanstalt. Wird bspw. dort ein Getränk verlangt, so kann an der Getränkeausgabe eine Kodierung in diesem Freiraum 19 erfolgen. Die Abrechnung erfolgt dann beim Verlassen der Badeanstalt durch das Prüfgerät 17.

Das streifenförmige Schließelement 8 ist so gestaltet, daß es um das Handgelenk unverlierbar gelegt werden kann. Zu diesem Zweck ist das eine Ende 8' des Schließelements 8 mit einer kreuzförmigen Einsecköffnung 20 versehen, während das andere Ende randseitige Aussparungen 21 ausbildet. Diese treten in Verhakung mit dem kürzeren Abschnitt 20' der kreuzförmigen Einsecköffnung 20, welcher Abschnitt 20' rechtwinklig zur Längserstreckung des streifenförmigen Schließelementes 8 verläuft.

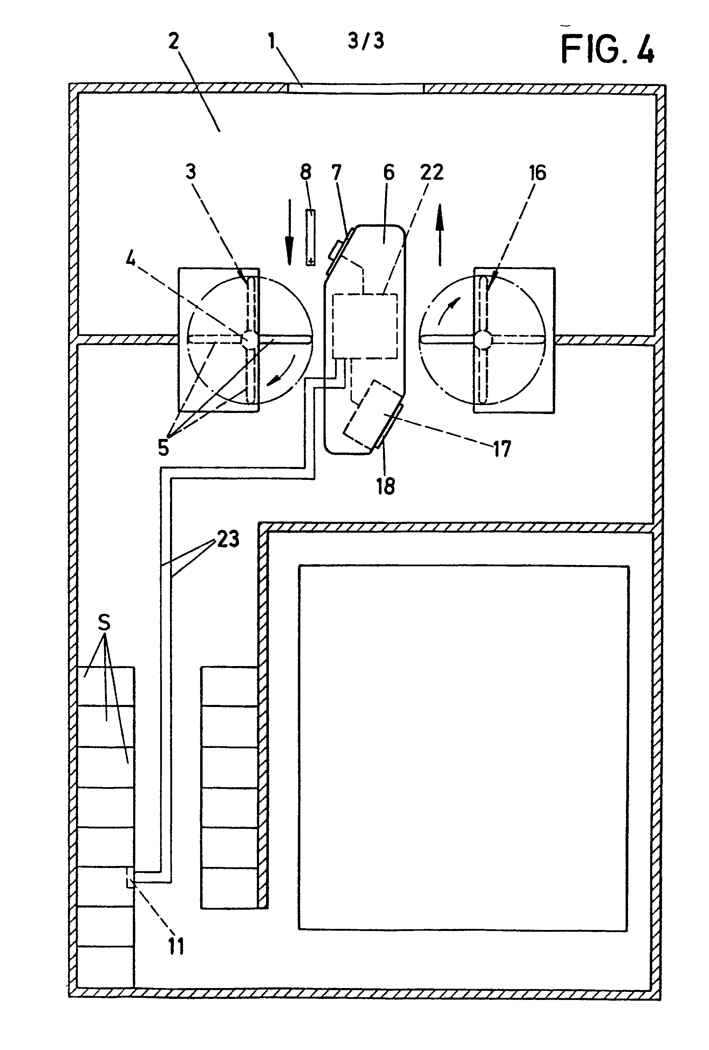

Bei der in Fig. 4 dargestellten zweiten Ausführungsform tragen gleiche Teile gleiche Bezugsziffern. In dem eingangsseitig angeordneten Automaten 6 ist eine Kodiereinrichtung 22 untergebracht. Dieselbe ist leitungsverbunden mit dem dargestellten Schließfachschloß 11. Die entsprechenden Leitungen tragen die Bezugsziffern 23. Es ist verständlich, daß die übrigen Schließfachschlösser ebenfalls mit der Kodiereinrichtung 22 leitungsverbunden sind.

Beim Eintritt in die Badeanstalt erhält der Besucher ebenfalls ein streifenförmiges Schließelement 8. Dessen Kodierung ist identisch mit dem im zugehörigen Schließfachschloß 11 gespeicherten Kode. Der Besucher kann daher mit diesem Schließelement 8 das Schließfachschloß 11 betätigen. Es ist ebenfalls eine Mehrfachbenutzung möglich während einer Aufenthaltszeit.

Wird für dieses Schließfachschloß erneut ein Schließelement 8 ausgegeben, so erhält dieses eine andere Kodierung und gleichzeitig wird über die Kodiereinrichtung 22 und Leitungen 23 eine Umkodierung des im Schließfachschloß 11 gespeicherten Kodes vorgenommen, so daß dieses wieder identisch ist mit der zuletzt ausgegebenen Kodierung des Schließelements 8. Ein evtl. zurückbehaltenes Schließelement 8 vermag daher nicht, das Schließfachschloß 11 zu betätigen, selbst wenn dieses zuvor möglich war.

## Ansprüche

1. Anlage zur aufsichtslosen Kontrolle der Benutzung, insbesondere der Benutzungszeit, von Badeanstalten, Lesesälen oder dergleichen, wobei einer Eingangssperre (3) ein durch Geldeingabe zu betätigender Automat (6) zur Ausgabe von zeitcodierten Schließelementen (8) zugeordnet ist, welche jeweils auf ein bestimmtes, im Inneren der Badeanstalt vorgesehenes Schließfachschloß (11) oder dergleichen abgestimmt sind und welche beim Ausgang einbehalten werden, daß der Automat (6) die streifenförmig gestalteten Schließelemente (8) bei der Ausgabe identisch codiert zu einem im zugehörigen Schließfachschloß (11) gespeicherten Code, dadurch gekennzeichnet, daß die Codierung entsprechend einem Fortschreibeprogramm erfolgt, welches identisch ist mit einem im zugehörigen Schließfachschloß (11) gespeicherten Programm.

2. Anlage nach Anspruch 1, dadurch gekennzeichnet, daß Zwischenstufen des Schließfachschloß-Programms überspringbar sind.

3. Anlage nach Anspruch 1, dadurch gekennzeichnet, daß das Schließelement (8) einen Freiraum (19) zur Aufnahme zusätzlicher, vom Schließ- und Zeitcode unabhängiger Codierungen aufweist.

## Claims

1. System for the unsupervised control of the use, in particular the time of use, of swimming baths, reading rooms or the like, a coin-operated machine (6) for the issuing of time-coded locking elements (8) being assigned to an entry barrier (3), which locking elements are each matched to a particular locker lock (11) or the like provided inside the swimming baths and are retained upon leaving, in which the machine (6) codes the strip-shaped locking elements (8) upon issue identically to a code stored in the associated locker lock (11), characterised in that the coding is carried out in accordance with an updating program which is identical to a program stored in the associated locker lock (11).

**2.** System according to Claim 1, characterised in that intermediate stages of the locker lock program can be skipped.

**3.** System according to Claim 1, characterised in that the locking element (8) has a free space (19) for accommodating additional codings independent of the locking code and time code.

**Revendications**

**1.** Installation de contrôle sans surveillance de l'utilisation, en particulier du temps d'utilisation d'établissements de bains, de salles de lecture ou d'établissements similaires, dans lequel un automate (6) à actionner par l'introduction de pièces de monnaie est affecté à une barrière d'entrée pour délivrer des éléments (8) de fermeture à clé codés en ce qui concerne la date et l'heure, qui correspondent chacun à une serrure (11) déterminée de casier fermant à clé ou similaire, prévue à l'intérieur de l'établissement de bains et qui sont repris et conservés à la sortie, l'automate (6) codant les éléments (8) de fermeture à clé en forme de bandes, lors de la délivrance, de façon identique à un code mis en mémoire dans la serrure (11) correspondante de casier fermant à clé, caractérisée en ce que le codage est effectué selon un programme séquentiel qui est identique à un programme enregistré dans la serrure (11) correspondante.

**2.** Installation selon la revendication 1, caractérisée en ce que des étapes intermédiaires du programme (S) de la serrure de casier fermant à clé peuvent être sautées.

**3.** Installation selon la revendication 1, caractérisée en ce que l'élément (8) de fermeture à clé présente un espace libre (19) destiné à recevoir des codages supplémentaires indépendants du code de fermeture à clé et du code de date et d'heure.

# FIG. 1

FIG. 2

FIG. 3

7

FIG. 4